# EUROPÄISCHE PATENTSCHRIFT

(11) **EP 1 387 951 B1**
(45) Veröffentlichungstag und Bekanntmachung des Hinweises auf die Patenterteilung: **28.07.2010**
(21) Anmeldenummer: 02735064.4
(22) Anmeldetag: 07.05.2002
(51) Int. Cl.: F02M 61/18

(54) **BRENNSTOFFEINSPRITZSYSTEM**
FUEL INJECTION SYSTEM
SYSTEME D'INJECTION DE CARBURANT

(30) Priorität: 09.05.2001 DE 10122350
(43) Veröffentlichungstag der Anmeldung: 11.02.2004
(73) Patentinhaber: ROBERT BOSCH GMBH, 70442 Stuttgart (DE)
(72) Erfinder: ARNDT, Stefan, 70569 Stuttgart (DE); DENZ, Helmut, 70184 Stuttgart (DE); HERDEN, Werner, 70839 Gerlingen (DE)
(74) Vertreter: Körfer, Thomas
(86) Internationale Anmeldenummer: PCT/DE2002/001631
(87) Internationale Veröffentlichungsnummer: WO 2002/090762

(56) Entgegenhaltungen:
- DE-A- 19 804 463
- US-A- 2 382 151
- US-A- 4 890 794
- US-A- 5 540 200
- US-A- 6 161 780

## Beschreibung

### Stand der Technik

Die Erfindung geht aus von einem Brennstoffeinspritzsystem nach der Gattung des Hauptanspruchs.

Aus der DE 198 27 219 A1 ist ein Brennstoffeinspritzsystem für eine Brennkraftmaschine bekannt, welche einen Injektor mit einer Brennstoffstrahleinstellplatte aufweist, welche erste Düsenlöcher besitzt, die entlang eines ersten Kreises angeordnet sind, sowie zweite Düsenlöcher, die entlang eines zweiten Kreises angeordnet sind. Der zweite Kreis hat einen Durchmesser, der größer als derjenige des ersten Kreises ist. Die Kreise sind dabei koaxial zu einer Mittelachse der Einstellplatte angeordnet. Jede Lochachse der zweiten Düsenlöcher bildet einen spitzen Winkel mit einer Referenzebene, die senkrecht zur Mittelachse des Ventilkörpers ist. Der Winkel ist kleiner als derjenige, der durch jede Lochachse der ersten Düsenlöcher mit der Referenzebene gebildet wird. Daher können Brennstoffzerstäubungen, die durch die ersten Düsenlöcher eingespritzt werden, weg von den Brennstoffzerstäubungen gerichtet werden, die durch die zweiten Düsenlöcher eingespritzt werden. Als ein Ergebnis stören die Brennstoffzerstäubungen, die durch die ersten Düsenlöcher eingespritzt werden, nicht die Brennstoffzerstäubungen, die durch die zweiten Düsenlöcher eingespritzt werden, was es ermöglicht, eingespritzten Brennstoff geeignet zu zerstäuben.

Aus der DE 196 42 653 C1 ist ein Verfahren zur Bildung eines zündfähigen Brennstoff-/Luftgemisches bekannt. In den Zylindern von direkt einspritzenden Brennkraftmaschinen ist ein zündfähiges Brennstoff-/Luftgemisch bildbar, indem in jeden von einem Kolben begrenzten Brennraum mittels eines Injektors bei Freigabe einer Düsenöffnung durch Abheben eines Ventilgliedes von einem die Düsenöffnung umfassenden Ventilsitz Brennstoff eingespritzt wird. Um unter allen Betriebsbedingungen der Brennkraftmaschine, insbesondere im Schichtladungsbetrieb, eine verbrauchs- und emissionsoptimierte innere Gemischbildung in jedem Betriebspunkt des gesamten Kennfeldes zu ermöglichen, ist vorgesehen, daß der Öffnungshub des Ventilgliedes und die Einspritzzeit variabel einstellbar sind.

Aus der DE 198 04 463 A1 ist ein Brennstoffeinspritzsystem für gemischverdichtende, fremdgezündete Brennkraftmaschinen bekannt, welches mit einem Einspritzventil, das Brennstoff in einen von einer Kolben-/Zylinderanordnung gebildeten Brennraum einspritzt, und mit einer in den Brennraum ragenden Zündkerze versehen ist. Das Einspritzventil ist mit wenigstens einer Reihe über den Umfang der Einspritzdüse verteilt angeordneten Einspritzlöchern versehen. Durch eine gezielte Einspritzung von Brennstoff über die Einspritzlöcher wird ein strahlgeführtes Trennverfahren durch Bildung einer Gemischwolke realisiert, wobei wenigstens ein Strahl zur Zündung in Richtung auf die Zündkerze gerichtet ist. Weitere Strahlen sind vorgesehen, durch die eine wenigstens annähernd geschlossene bzw. zusammenhängende Gemischwolke gebildet wird.

Nachteilig an den aus den obengenannten Druckschriften bekannten Verfahren zur Gemischbildung bzw. Brennstoffeinspritzsystemen sind insbesondere die mangelnde Homogenität der Gemischwolke sowie das Problem, das zündfähige Gemisch in den Bereich der Funkenstrecke der Zündkerze zu transportieren. Um eine emissionsarme, brennstoffsparende Verbrennung zu ermöglichen, müssen in diesen Fällen komplizierte Brennraumgeometrien, Drallventile oder Verwirbelungsmechanismen benutzt werden, um einerseits den Brennraum mit dem Brennstoff-/Luftgemisch zu füllen und andererseits das zündfähige Gemisch zur Zündkerze zu führen.

Dabei wird zumeist die Zündkerze direkt angespritzt. Dies führt zu starker Verrußung der Zündkerze und häufigen Thermoschocks, wodurch die Zündkerze eine kürzere Lebensdauer aufweist.

Nachteilig an dem aus der DE 196 42 653 C1 bekannten Verfahren zur Bildung eines zündfähigen Brennstoff-/Luftgemisches ist zudem die Unmöglichkeit, insbesondere im Schichtladungsbetrieb kleine Brennstoffmengen präzise zuzumessen, da die Zeiten für das Öffnen bzw. Schließen des Brennstoffeinspritzventils nicht genau genug gesteuert werden können.

Das Dokument JP-08061188 beschreibt ein Brennstoffeinspritzventil für einen Dieselmotor, der Einspritzöffnungen mit unterschiedlichem Durchmesser zeigt. Die Hauptabspritzöffnungen haben einen größeren Durchmesser als die Nebenabspritzöffnungen. Der Eintrittswinkel der Nebenabspritzöffnungen ist bezüglich einer Senkrechten bezüglich des Brennstoffeinspritzventils größer als der Eintrittswinkel der Hauptabspritzöffnungen bezüglich selbiger Senkrechten. Des Weiteren ist die Länge der Hauptabspritzöffnung geringer als die Länge der Nebenabspritzöffnungen. Die Anordnung löst insbesondere die Aufgabe, die Einspritzmenge durch die Nebenabspritzöffnung in einem niedrigen Lastbereich des Motors aufgrund des hohen Durchgangswiderstandes durch die kleine Abspritzöffnung stark zu verringern, so dass in dem niedrigen Lastbereich der Brennstoff möglichst ausschließlich durch die Hauptabspritzöffnung mit großem Durchmesser und geringem Durchgangswiderstand eingespritzt wird. Auf diese Weise kann die Bildung von NOx kontrolliert werden, während eine anfängliche Einspritzmenge verringert wird.

### Vorteile der Erfindung

Das erfindungsgemäße Brennstoffeinspritzsystem mit den kennzeichnenden Merkmalen des Hauptanspruchs hat demgegenüber den Vorteil, daß durch die Anordnung von Einspritzlöchern unterschiedlicher Durchmesser eine Gemischwolke im Brennraum gebildet wird, welche über eine Anfettung im Bereich des ventilnahen Bereichs der eingespritzten Brennstoffstrahlen verfügt, wodurch im Bereich der Zündkerze eine Verzögerung des Zündzeitpunktes erreicht wird. Dadurch kann eine emissionsarme und schnelle Verbrennung der Gemischwolke erzielt werden.

Durch die in den Unteransprüchen aufgeführten Maßnahmen sind vorteilhafte Weiterentwicklungen des im Hauptanspruch angegebenen Brennstoffeinspritzsystems möglich.

Von Vorteil ist insbesondere die Anordnung kleinerer Nebenabspritzöffnungen zwischen größeren Hauptabspritzöffnungen. Die Nebenabspritzöffnungen sind dabei kreuzförmig oder in konzentrischen Kreisen um eine zentrale Abspritzöffnung gruppiert.

Von Vorteil ist auch die Einbringung von Nebenabspritzöffnungen, die über ein reduziertes Verhältnis zwischen der axialen Länge der Nebenabspritzöffnungen gegenüber ihrem Durchmesser verfügen. Auch dadurch kann eine Strahlaufweitung bei geringerer Penetration erreicht werden.

Insbesondere ist die Reduzierung des Verhältnisses der Länge zum Durchmesser der Nebenabspritzöffnung bei der zentralen Abspritzöffnung von Vorteil, da hierbei bei sehr geringem Aufwand eine Anfettung der Gemischwolke im ventilnahen Bereich erzielt werden kann.

Weiterhin ist die Verwendung konischer Abspritzöffnungen von Vorteil, da diese leicht herstallbar sind und eine große Strahlaufweitung ermöglichen.

### Zeichnung

Ausführungsbeispiele der Erfindung sind in der Zeichnung vereinfacht dargestellt und in der nachfolgenden Beschreibung näher erläutert. Es zeigen:
- Fig. 1: einen schematischen Schnitt durch ein Ausführungsbeispiel eines Brennstoffeinspritz- systems gemäß dem Stand der Technik,
- Fig. 2: eine beispielhafte schematische Schnittdarstellung einer mittels des erfindungsgemäß ausgestalteten Brennstoffeinspritzsystems eingespritzten Gemischwolke,
- Fig. 3A: einen Querschnitt durch ein erstes Ausführungsbeispiel eines Ventilkörpers mit Haupt- und Nebenabspritzöffnungen,
- Fig. 3B: einen Querschnitt durch ein zweites Ausführungsbeispiel eines Ventilkörpers mit Haupt- und Nebenabspritzöffnungen,
- Fig. 4A: einen Querschnitt durch ein drittes Ausführungsbeispiel eines Ventilkörpers mit unterschiedlich dimensionierten Abspritzöffnungen,
- Fig. 4B: einen Querschnitt durch ein viertes Ausführungsbeispiel eines Ventilkörpers mit unterschiedlich dimensionierten Abspritzöffnungen,
- Fig. 5A: eine schematische Darstellung eines fünften Ausführungsbeispiels eines Ventilschließkörpers eines Brennstoffeinspritzventils eines erfindungsgemäß ausgestalteten Brennstoffeinspritzsystems mit konisch geformten Abspritzöffnungen,
- Fig.5B: eine vergrößerte Darstellung einer konischen Abspritzöffnung im Bereich VB in Fig. 5A, und
- Fig. 5C: eine schematische Darstellung eines sechsten Ausführungsbeispiels im Bereich VB in Fig. 5A.

### Beschreibung der Ausführungsbeispiele

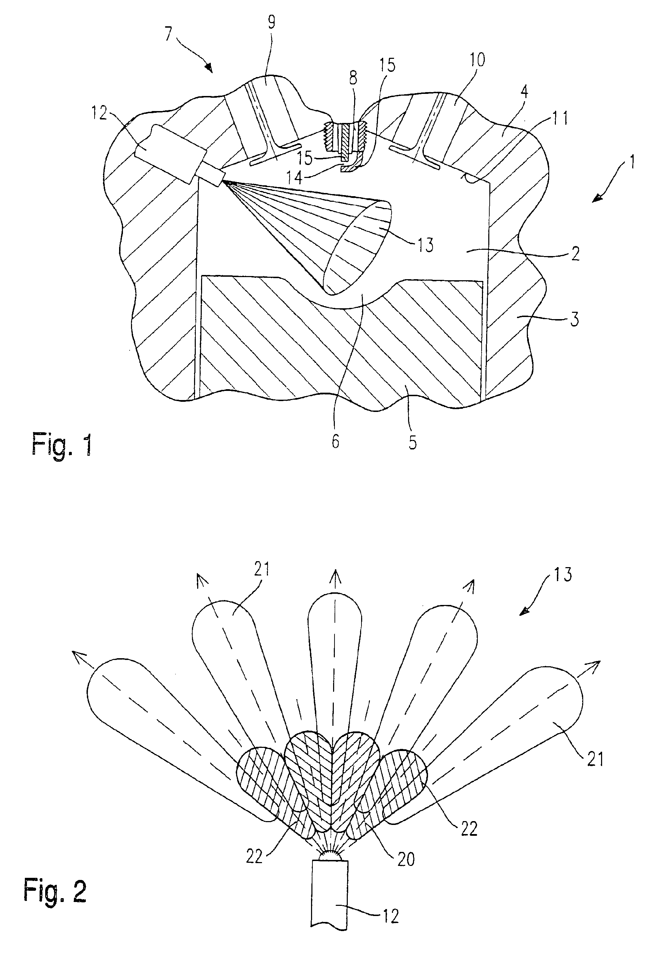

Fig. 1 zeigt einen schematischen Schnitt durch ein Ausführungsbeispiel eines Brennstoffeinspritzsystems gemäß dem Stand der Technik. Das Brennstoffeinspritzsystem 1 weist einen Brennraum 2 auf, welcher durch eine Zylinderwandung 3, einen Zylinderkopf 4 sowie einen Kolben 5 begrenzt wird. Im Kolben 5 ist eine Brennraummulde 6 ausgebildet. In einem First 7 des Brennraums 2 ist eine Zündkerze 8 mit zwei Elektroden 15 z. B. zentral angeordnet. Ein Einlaßventil 9 und ein Auslaßventil 10 sind an Firstschrägen 11 des Brennraums 2 angedeutet. Ein seitlich zwischen der Zylinderwandung 3 und dem Zylinderkopf 4 angeordnetes Brennstoffeinspritzventil 12 spritzt eine kegelförmige Gemischwolke 13 in den Brennraum 2 ein. Die Geometrie der Brennraummulde 6 sowie die Form der Gemischwolke 13 bestimmen den Weg der Gemischwolke 13 in den Bereich einer Funkenstrecke 14, welche sich zwischen den Elektroden 15 der Zündkerze 8 erstreckt. Die Gemischwolke 13 wird durch den elektrischen Funken der Zündkerze 8 gezündet.

Die Gemischwolke 13 ist in herkömmlichen Brennstoffeinspritzsystemen 1 bedingt durch das Einspritzverhalten der Brennstoffeinspritzventile 12 nur bedingt stöchiometrisch. Die Strahlfront, also der Bereich der Gemischwolke 13, der am weitesten vom Brennstoffeinspritzventil 12 entfernt ist und zeitlich als erstes eingespritzt worden ist, ist durch die größte Tröpfchengröße im Spray bestimmt, während das Strahlende, also der Bereich der Gemischwolke 13, der dem Brennstoffeinspritzventil 12 am nächsten ist und zeitlich zuletzt eingespritzt worden ist, von den kleinsten Tröpfchen bestimmt ist. Die Verteilung des Brennstoffes zwischen diesen beiden Bereichen ist nicht derartig, daß ein einheitliches, stöchiometrisches Gemisch entstehen kann. Einerseits enthält das Gemisch gaußverteilt deutlich mehr mittelgroße Tröpfchen als große oder kleine, andererseits können auch Änderungen im Massenfluß wie z. B. beim Öffnen und Schließen des Brennstoffeinspritzventils 12 und strömungsdynamische Phänomene Auswirkungen auf die Stöchiometrie der Gemischwolke 13 haben.

Damit die oben aufgeführten Nachteile der Gemischwolke 13 behoben werden können, sind erfindungsgemäß Maßnahmen vorgesehen, welche die eingespritzte Gemischwolke 13 durch die Lochanordnung, den Lochdurchmesser und/oder das Verhältnis der axialen Lochlänge zum Lochdurchmesser so beeinflussen, daß ein Strahlwurzelbereich 20, also der Bereich, der dem Brennstoffeinspritzventil 12 am nächsten ist und zeitlich als letztes eingespritzt worden ist, so beeinflußt, daß Hauptstrahlen 21 mit hoher Penetration und geringem Öffnungswinkel durch Nebenstrahlen 22 ergänzt werden, wie in Fig. 2 schematisch dargestellt. Die Nebenstrahlen 22 zeichnen sich durch eine geringe Penetration und/oder einen größeren Öffnungswinkel als die Hauptstrahlen 21 aus. Dadurch kann der dem Brennstoffeinspritzventil 12 nächstliegende Teil der Gemischwolke 13 angefettet werden.

Wie bereits erwähnt, können zum Zweck der Anfettung der Gemischwolke 13 im Strahlwurzelbereich 20 verschiedene Maßnahmen, die den Durchmesser und/oder die Anzahl der Abspritzöffnungen des Brennstoffeinspritzventils 12 betreffen, ergriffen werden.

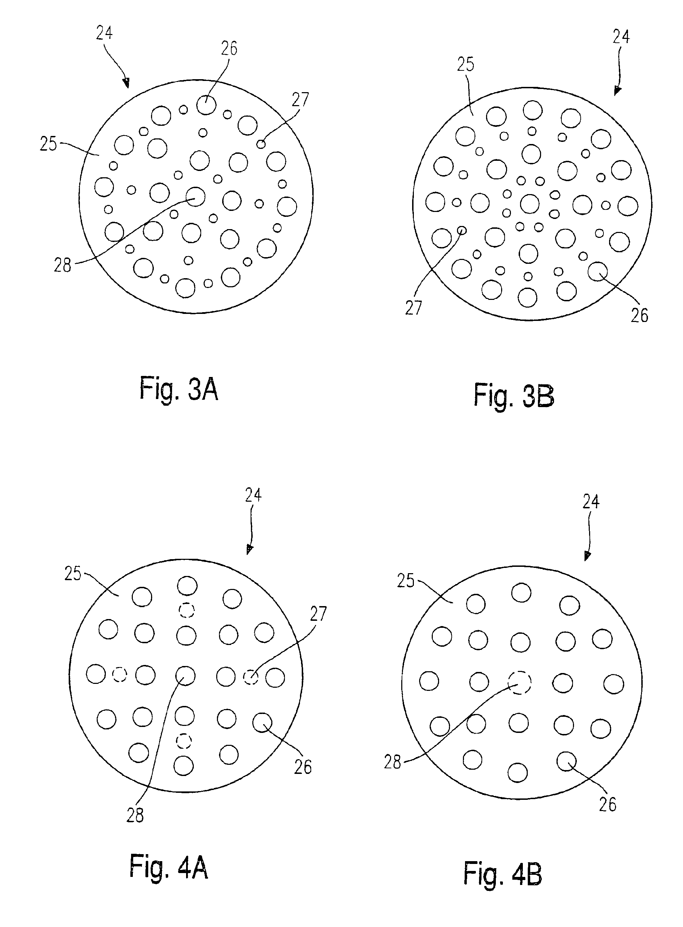

Fig. 3A zeigt ein erstes Ausführungsbeispiel einer Anordnung von Abspritzöffnungen 26 und 27 in einem Ventilsitzkörper 24 des Brennstoffeinspritzventils 12 des erfindungsgemäß ausgestalteten Brennstoffeinspritzsystems 1. Die Darstellung ist als Aufsicht auf eine Lochplatte 25, die entweder einstückig mit dem Ventilsitzkörper 24 ausgebildet oder auf diesen aufgesetzt ist, zu sehen.

Die Lochplatte 25 weist im Ausführungsbeispiel 21 Hauptabspritzöffnungen 26 auf, die auf einem außenliegende Kreis und einer innenliegenden sternförmigen Anordnung mit einer zentralen Abspritzöffnung 28 in der Lochplatte 25 angeordnet sind, und 20 Nebenabspritzöffnungen 27, die regelmäßig in den Zwischenräumen zwischen den Hauptabspritzöffnungen 26 ausgebildet sind. Erfindungsgemäß sind die Nebenabspritzöffnungen 27 dabei mit einem deutlich geringeren Durchmesser als die Hauptabspritzöffnungen 26 versehen. Dadurch beträgt die Penetration der aus den Nebenabspritzöffnungen 27 abgespritzten Nebenstrahlen 22 nur etwa 20 bis 50% der Eindringtiefe der von den Hauptabspritzöffnungen 26 abgespritzten Hauptstrahlen 21.

Die Lochdurchmesser der Hauptabspritzöffnungen 26 kann dabei 50 µm bis 100 µm betragen, während der Durchmesser der Nebenabspritzöffnungen 27 30 µm bis 70µm betragen kann.

Fig. 3B zeigt in der gleichen Darstellung wie Fig. 3A ein weiteres Ausführungsbeispiel für die Kombination von Hauptabspritzöffnungen 26 und Nebenabspritzöffnungen 27 in einer Lochplatte 25 eines Ventilsitzkörpers 24.

In diesem Ausführungsbeispiel sind sowohl die Hauptabspritzöffnungen 26 als auch die Nebenabspritzöffnungen 27 auf konzentrischen Kreisen angeordnet, wodurch die Lochplatte 25 einfach herstellbar und die Gemischwolke 13 in radialer Richtung im Kernbereich sehr homogen wird.

Eine weitere Möglichkeit der Anfettung des Strahlwurzelbereichs 20 besteht in der Reduzierung der axialen Lochlänge 1 im Verhältnis zum Lochdurchmesser d der Abspritzöffnungen 26 in der Lochplatte 25.

Fig. 4A und Fig. 4B zeigen in gleicher Ansicht wie Fig. 3A und 3B eine Anordnung von Hauptabspritzöffnungen 26 und Nebenabspritzöffnungen 27, die ein reduziertes Verhältnis 1/d aufweisen. Die Anordnung der Hauptabspritzöffnungen 26 entspricht dabei der in Fig. 3A dargestellten Anordnung.

Fig. 4A stellt eine Anordnung mit vier zusätzlichen Nebenabspritzöffnungen 27 dar, die zur besseren Unterscheidung gestrichelt dargestellt und kreuzförmig um die zentrale Abspritzöffnung 28 angeordnet sind, während in Fig. 4B lediglich die zentrale Abspritzöffnung 28 ein reduziertes Verhältnis 1/d aufweist, was eine besonders einfache und leicht verstellbare Anordnung darstellt. Zusätzlich weisen die Nebenabspritzöffnungen 27 auch einen reduzierten Durchmesser auf.

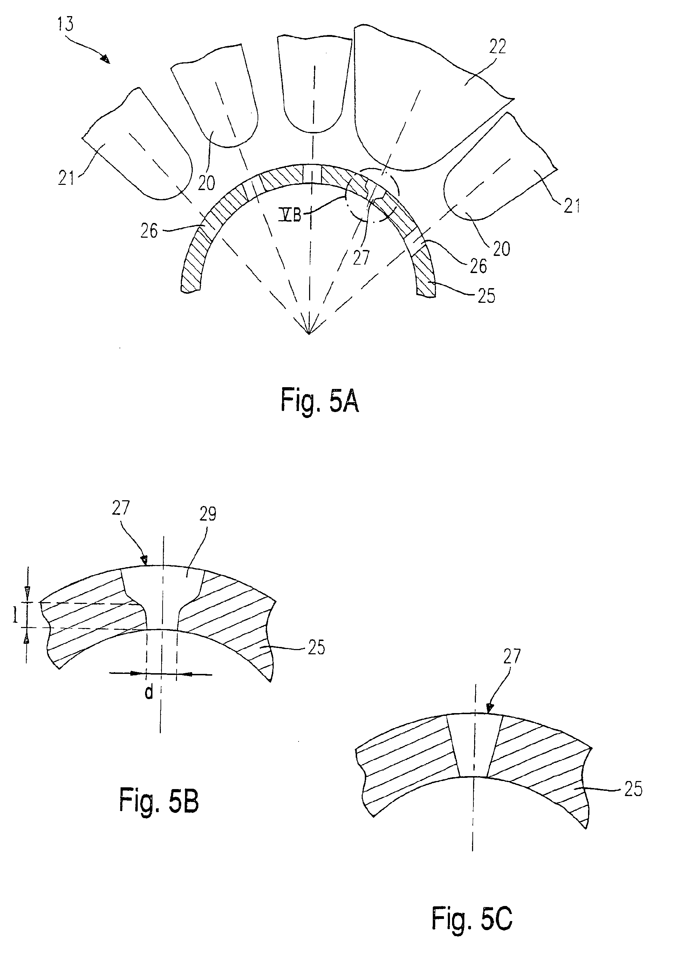

Fig. 5A zeigt in gleicher Ansicht wie Fig. 2 eine schematische Darstellung der eingespritzten Gemischwolke 13 bei Verwendung zumindest einer Nebenabspritzöffnung 27 mit reduziertem Verhältnis 1/d. Durch die Aufweitung des Öffnungswinkels der Nebenabspritzöffnung 27 weist der Nebenstrahl 22 eine geringere Penetration und einen größeren Öffnungswinkel als die Hauptstrahlen auf, wodurch es zu einer Anfettung des Strahlwurzelbereichs 20 kommt. Bei geschickter Verteilung der Nebenabspritzöffnungen 27 kann eine homogene Anfettung erzielt werden.

Fig. 5B zeigt in einer auszugsweisen Schnittdarstellung den in Fig. 5A mit VB bezeichneten Ausschnitt im Bereich einer Nebenabspritzöffnung 27 mit einem reduzierten Verhältnis 1/d. Die axiale Länge 1 der Nebenabspritzöffnung 27 ist durch eine Aufweitung 29 reduziert, die beispielsweise durch Aufbohren in die Lochplatte 25 einbringbar ist.

In Fig. 5C ist ein weiteres Ausführungsbeispiel einer Nebenabspritzöffnung 27 dargestellt, die konisch ausgeführt ist, so daß der Durchmesser im Austrittsbereich deutlich gegenüber dem Durchmesser im Eintrittsbereich aufgeweitet ist.

Die in den Fig. 5B und Fig. 5C dargestellten Formen von Nebenabspritzöffnungen 27 können in jeder der in Fig. 4A oder Fig. 4B dargestellten Lochplatten 25 verwendet werden. Der Effekt der Aufweitung des Strahlwinkels bei geringerer Penetration und Anfettung des Strahlwurzelbereiches 20 ist in allen Fällen vergleichbar.

Zudem ist es möglich, die genannten Maßnahmen mit einer zusätzlichen Maßnahme der Anfettung des düsennahen Strahlwurzelbereiches 20 zu kombinieren, indem nach dem Haupteinspritzimpuls ein Nacheinspritzimpuls induziert wird, der eine zusätzliche Menge Brennstoff in den Zylinder einspritzt und damit zur Anfettung des Gemisches beiträgt.

Die Erfindung ist nicht auf die dargestellten Ausführungsbeispiele beschränkt und z. B. auch für andere Anordnungen von Abspritzöffnungen oder Kombinationen mehrerer Merkmale anwendbar.

## Patentansprüche

1. Brennstoffeinspritzsystem (1) für Brennkraftmaschinen mit einem Brennstoffeinspritzventil (12), das Brennstoff direkt in einen Brennraum (2) einspritzt, der von einer Zylinderwandung (3) gebildet wird, in der ein Kolben (5) geführt ist, und mit einer in den Brennraum (2) ragenden Zündkerze (8),
wobei das Brennstoffeinspritzventil (12) in dem Brennraum (2) durch auf einer mit einem Ventilsitzkörper (24) des Brennstoffeinspritzventils (12) verbundenen oder mit diesem einstückig ausgebildeten Lochplatte (25) angeordnete Hauptabspritzöffnungen (26) eine Gemischwolke (13) erzeugt,
wobei die Lochplatte (25) Nebenabspritzöffnungen (27) aufweist, deren Durchmesser kleiner als der der Hauptabspritzöffnungen (26) ist, und
wobei die Nebenabspritzöffnungen (27) zwischen den Hauptabspritzöffnungen (26) angeordnet und um eine zentrale Abspritzöffnung (28) gruppiert sind,
**dadurch gekennzeichnet,**
**dass** der Durchmesser im Austrittsbereich gegenüber dem Durchmesser im Eintrittsbereich der Nebenabspritzöffnung (27) aufgeweitet ist, um eine Anfettung im Strahlwurzelbereich (20) der Gemischwolke (13) zu erzielen.

2. Brennstoffeinspritzsystem nach Anspruch 1,
**dadurch gekennzeichnet,**
**dass** die Penetration von aus den Nebenabspritzöffnungen (27) eingespritzten Nebenstrahlen (22) geringer ist als die Penetration von aus den Hauptabspritzöffnungen (26) abgespritzten Hauptstrahlen (21).

3. Brennstoffeinspritzsystem nach Anspruch 1 oder 2,
**dadurch gekennzeichnet,**
**dass** die Nebenstrahlen (22) die Hauptstrahlen (21) zumindest teilweise überlappen.

4. Brennstoffeinspritzsystem nach Anspruch 1 bis 3, **dadurch gekennzeichnet,**
**dass** die Nebenabspritzöffnungen (27) ein reduziertes Verhältnis von axialer Länge (1) und Durchmesser (d) im Vergleich zu den Hauptabspritzöffnungen (26) aufweisen.

5. Brennstoffeinspritzsystem nach Anspruch 4,
**dadurch gekennzeichnet,**
**dass** die Nebenabspritzöffnungen (27) einen gestuften Querschnitt aufweisen.

6. Brennstoffeinspritzsystem nach Anspruch 5,
**dadurch gekennzeichnet,**
**dass** die Nebenabspritzöffnungen (27) einen konischen Querschnitt aufweisen.

7. Brennstoffeinspritzsystem nach Anspruch 5 oder 6,
**dadurch gekennzeichnet,**
**dass** der zuströmseitige Durchmesser der gestuften oder konischen Nebenabspritzöffnungen (27) kleiner als der abspritzseitige Durchmesser ist.

8. Brennstoffeinspritzsystem nach Anspruch 1,
**dadurch gekennzeichnet,**
**dass** der Durchmesser der Hauptabspritzöffnungen (26) im Bereich zwischen 50 µm und 100 µm liegt und der Durchmesser der Nebenabspritzöffnungen im Bereich zwischen 30 µm und 70 µm liegt.

## Claims

1. Fuel injection system (1) for internal combustion engines, having a fuel injection valve (12) which injects fuel directly into a combustion chamber (2) which is formed by a cylinder wall (3) in which a piston (5) is guided, and having a spark plug (8) which projects into the combustion chamber (2),
with the fuel injection valve (12) generating a mixture cloud (13) in the combustion chamber (2) through main ejection openings (26) arranged on a perforated plate (25) which is connected to or formed in one piece with a valve seat body (24) of the fuel injection valve (12),
with the perforated plate (25) having secondary ejection openings (27) whose diameter is smaller than that of the main ejection openings (26), and
with the secondary ejection openings (27) being arranged between the main ejection openings (26) and being grouped around a central ejection opening (28), **characterized**
**in that** the diameter in the outlet region is widened in relation to the diameter in the inlet region of the secondary ejection opening (27) in order to obtain an enrichment in the jet root region (20) of the mixture cloud (13).

2. Fuel injection system according to Claim 1,
**characterized**
**in that** the penetration of secondary jets (22) injected from the secondary ejection openings (27) is lower than the penetration of main jets (21) ejected from the main ejection openings (26).

3. Fuel injection system according to Claim 1 or 2,
**characterized**
**in that** the secondary jets (22) at least partially overlap the main jets (21).

4. Fuel injection system according to Claim 1 to 3,
**characterized**
**in that** the secondary ejection openings (27) have a reduced ratio of axial length (1) and diameter (d) in relation to the main ejection openings (26).

5. Fuel injection system according to Claim 4,
**characterized**
**in that** the secondary ejection openings (27) have a stepped cross section.

6. Fuel injection system according to Claim 5,
**characterized**
**in that** the secondary ejection openings (27) have a conical cross section.

7. Fuel injection system according to Claim 5 or 6,
**characterized**
**in that** the inflow-side diameter of the stepped or conical secondary ejection openings (27) is smaller than the ejection-side diameter.

8. Fuel injection system according to Claim 1,
**characterized**
**in that** the diameter of the main ejection openings (26) lies in the range between 50 µm and 100 µm and the diameter of the secondary ejection openings lies in the range between 30 µm and 70 µm.

## Revendications

1. Système d'injection de carburant (1) pour moteurs à combustion interne, comprenant une soupape d'injection de carburant (12) qui injecte du carburant directement dans une chambre de combustion (2) formée par une paroi de cylindre (3), dans laquelle un piston (5) est guidé, et comprenant une bougie d'allumage (8) faisant saillie à l'intérieur de la chambre de combustion (2),
la soupape d'injection de carburant (12) produisant un nuage de mélange (13) dans la chambre de combustion (2), par des ouvertures de pulvérisation principales (26) pratiquées sur une plaque perforée (25) connectée à un corps de siège de soupape (24) de la soupape d'injection de carburant (12) ou réalisée d'une seule pièce avec celle-ci,
la plaque perforée (25) présentant des ouvertures de pulvérisation secondaires (27) dont le diamètre est inférieur à celui des ouvertures de pulvérisation principales (26), et
les ouvertures de pulvérisation secondaires (27) étant disposées entre les ouvertures de pulvérisation principales (26) et étant regroupées autour d'une ouverture de pulvérisation centrale (28),
**caractérisé en ce que**
le diamètre dans la région de sortie est élargi par rapport au diamètre dans la région d'entrée de l'ouverture de pulvérisation secondaire (27), afin de produire un enrichissement dans la région de la base du jet (20) du nuage de mélange (13).

2. Système d'injection de carburant selon la revendication 1,
**caractérisé en ce que**
la pénétration de jets secondaires (22) injectés depuis les ouvertures de pulvérisation secondaires (27) est plus faible que la pénétration des jets principaux (21) pulvérisés depuis les ouvertures de pulvérisation principales (26).

3. Système d'injection de carburant selon la revendication 1 ou 2,
**caractérisé en ce que**
les jets secondaires (22) recouvrent au moins en partie les jets principaux (21).

4. Système d'injection de carburant selon les revendications 1 à 3,
**caractérisé en ce que**
les ouvertures de pulvérisation secondaires (27) présentent un rapport réduit entre la longueur axiale (1) et le diamètre (d) par comparaison avec les ouvertures de pulvérisation principales (26).

5. Système d'injection de carburant selon la revendication 4,
**caractérisé en ce que**
les ouvertures de pulvérisation secondaires (27) présentent une section transversale étagée.

6. Système d'injection de carburant selon la revendication 5,
**caractérisé en ce que** les ouvertures de pulvérisation secondaires (27) présentent une section transversale conique.

7. Système d'injection de carburant selon la revendication 5 ou 6,
**caractérisé en ce que**
le diamètre du côté de l'afflux des ouvertures de pulvérisation secondaires étagées ou coniques (27) est inférieur au diamètre du côté de la pulvérisation.

8. Système d'injection de carburant selon la revendication 1,
**caractérisé en ce que**
le diamètre des ouvertures de pulvérisation principales (26) est compris dans la plage de 50 µm à 100 µm et le diamètre des ouvertures de pulvérisation secondaires est compris dans la plage de 30 µm à 70 µm.
